# EUROPEAN PATENT APPLICATION

(11) **EP 1 091 136 A2**
(43) Date of publication of application: **11.04.2001**
(21) Application number: 00308695.6
(22) Date of filing: 03.10.2000
(51) Int. Cl.: F16D 65/12

(54) **Core plate for a friction disc and method for making such a plate**

(30) Priority: 06.10.1999 GB 9923633
(71) Applicant: Meritor Heavy Vehicle Braking Systems (UK) Limited, Reading, Berks RG6 1LA (GB)
(72) Inventor: Williamson, Michael, Caerleon, Newport NP18 3SY (GB); Parry, David, Maes-Y-Rhiw, Cwmbran NP44 5EJ (GB); Esau, Peter Ronald, Coed Eva, Cwmbran NP44 4TE (GB)
(74) Representative: Marsh, David John

(57) **Abstract**

A core plate (2) for a friction disc is disclosed, the plate having a circumferentially and radially extending portion (3), for carrying friction pad means, and a circumferentially and axially extending portion (4) extending axially away from the radially extending portion in one direction only. A method of making a core plate (2) for a friction disc from a unitary plate is further disclosed, the core plate when made including a circumferentially and axially extending portion (4) which extends axially away from a circumferentially and radially extending portion (3). The core plate may be included in a friction disc in a brake assembly.

## Description

This invention relates to a core plate for a friction disc and to a method for making such a plate. The invention is concerned particularly, but not exclusively, with core plates suitable for friction discs used in ball-and-ramp brakes.

Friction discs are known for ball-and-ramp brakes which comprise a substantially annular centre plate for carrying friction pads and two reinforcing plates welded to opposite sides of the centre plate and having a similar internal diameter to that of the centre plate. Following fabrication of the three-piece core plate, splines are generally formed on the radially inwardly facing surface of the three-piece plate.

In accordance with the present invention, there is provided a core plate for a friction disc as claimed in claim 1.

In accordance with a further aspect of the invention, there is provided a core plate for a friction disc as claimed in claim 3.

In accordance with a still further aspect of the invention, there is provided a method of making a core plate as claimed in claim 9.

The invention facilitates the provision of a brake assembly having a shorter axial length. Furthermore, fewer process steps and the reduction in component parts facilitates easier and cheaper production of friction discs.

In order that the invention may be better understood, an embodiment thereof will now be described, by way of example only, with reference to the accompanying drawings, in which:
Figure 1 is a sectional side view of a friction disc;
Figure 2 is an end view of the friction disc of Figure 1; and
Figure 3 is a sectional side view of a ball-and-ramp brake assembly including a pair of friction discs similar to the friction discs shown in Figures 1 and 2.

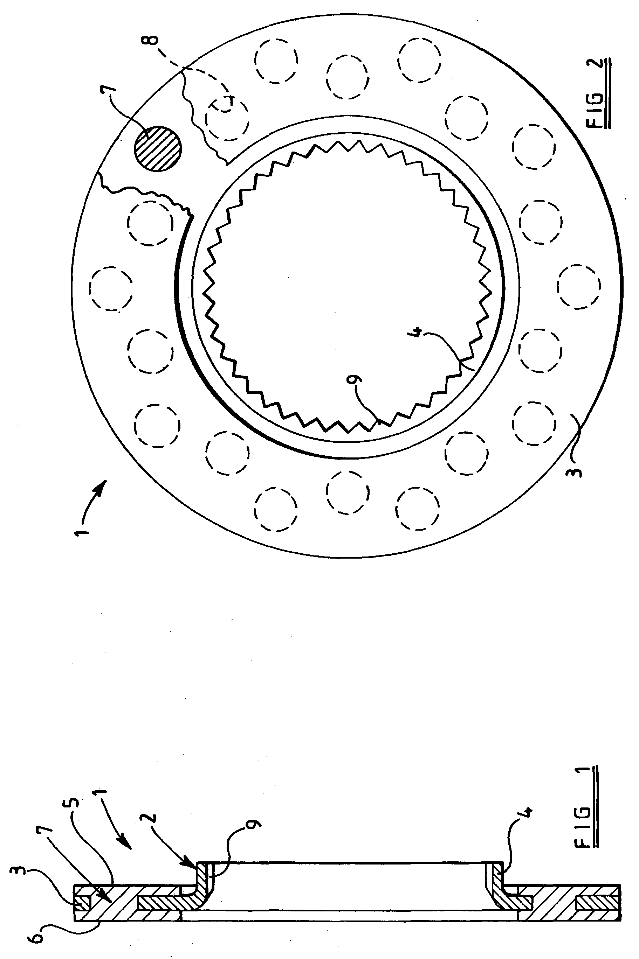

Referring to Figures 1 and 2, a friction disc 1 is shown having a core plate 2. The core plate 2 has a circumferentially and radially outwardly extending, substantially annular, portion 3 and a circumferentially and axially extending portion 4 which extends in one direction axially away from the radially extending portion 3 (to the right in Figure 1).

The primarily radially extending portion 3 of the core plate 2 carries a substantially annular friction pad 5,6 on each side thereof. The friction pads 5,6 are supported on the core plate 2 by web portions 7 which pass through holes 8 in the radially extending portion 3 so as to interconnect the friction pads 5,6. The primarily axially extending portion 4 has spines 9 formed in its radially inwardly facing surface.

The core plate 2 is formed by taking a single substantially annular, unitary, flat steel plate and cold forming the axially extending portion 4 into a tube as shown in Figure 1. Alternative methods of forming such a tube, including hot forming methods, will be obviously apparent to the skilled man. The splines 9 are partially formed during the cold forming step, and another cold forming process is applied to the part formed core plate to accurately finish the splines 9. The cold forming process may involve forcing a die through the centre hole of a substantially flat, substantially annular steel plate. The holes 8 may be pre-formed in the flat plate by any convenient method. Subsequent to forming the core plate 2, the friction pads are fitted to or formed about the radially extending portion 3 of the core plate 2 in a known manner.

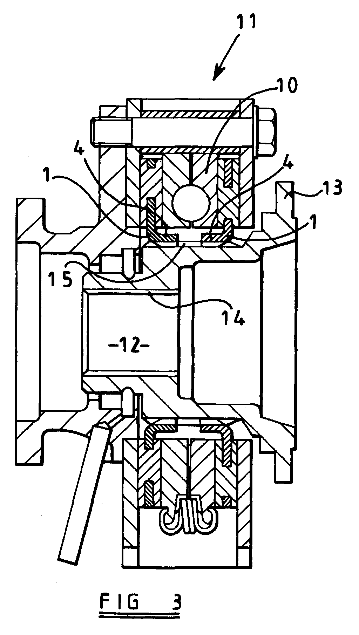

Figure 3 shows two friction discs 1 assembled either side of a ball-and-ramp actuator 10 in a brake assembly shown generally as 11. A drive shaft assembly comprising a drive shaft 12 and a hub 13 transmits drive from a transmission through a first set of the spines 14 between the shaft 12 and the hub 13 and a second set of splines 15, including splines 9, between the hub 13 and the friction discs 1. It will be apparent from Figure 3 that the axially inwardly directed spine-carrying portions 4 of each of the friction discs 1 provide an axially shorter hub than if the splines 9 were supported by axially outwardly extending portions on the core plates 2 of the friction discs 1, whilst facilitating the provision of sufficiently long splines 9 to provide the necessary strength for reliably transmitting rotary drive from the hub 13 to the discs 1. This is a particularly useful arrangement for use in a ball-and-ramp type brake assembly as shown, where axial movement of the friction discs 1 is important.

## Claims

1. A core plate (2) for a friction disc, the plate having a circumferentially and radially extending portion (3), for carrying friction pad means, and a circumferentially and axially extending portion (4) extending axially away from the circumferentially and radially extending portion in one direction only.

2. A core plate for a friction disc as claimed in Claim 1, made from a unitary plate.

3. A core plate (2) for a friction disc made from a unitary plate, the core plate having a circumferentially and radially extending portion (3), for carrying friction pad means, and a circumferentially and axially extending portion (4) extending axially away from the circumferentially and radially extending portion.

4. A core plate (2) for a friction disc as claimed in Claim 3, wherein the axially extending portion (4) extends axially away from the radially extending portion (3) in one direction only.

5. A core plate (2) for a friction disc as claimed in any one of the preceding claims, wherein the axially extending portion (4) extends from a radially innermost portion of the radially extending portion (3).

6. A core plate for a friction disc as claimed in any one of the preceding claims, wherein the axially extending portion is splined (9).

7. A friction disc (1) having a core plate as claimed in any one of claims 1 to 6.

8. A brake assembly having a pair of friction discs (1) as claimed in claim 7 and an actuator operable to apply force to opposite axially inwardly facing friction surfaces of respective friction pad means (5, 6) carried by respective said circumferentially and radially extending portions (3) of the friction discs, each said respective circumferentially and axially extending portion (4) extending axially inwardly, but not axially outwardly, for transmitting rotary drive to the disc (1) from a shaft.

9. A method of making a core plate (2) for a friction disc from a unitary plate, the core plate when made including a circumferentially and axially extending portion (4) which extends axially away from a circumferentially and radially extending portion (3).

10. A method as claimed in claim 9, comprising the step of at least partially forming splines (9) on the axially extending portion (4) by cold forming, and a further cold forming step to more accurately define the splines (9).
